# EUROPEAN PATENT APPLICATION

(11) **EP 3 561 256 A1**
(43) Date of publication of application: **30.10.2019**
(21) Application number: 18767576.4
(22) Date of filing: 09.03.2018
(51) Int. Cl.: F02B 23/06, F02B 23/10, F02M 61/14

(54) **DIESEL ENGINE**

(30) Priority: 17.03.2017 JP 2017052234
(71) Applicant: Mazda Motor Corporation, Aki-gun Hiroshima 730-8670 (JP)
(72) Inventor: KANZAKI Jun, Aki-gun Hiroshima 730-8670 (JP); KATAOKA Motoshi, Aki-gun Hiroshima 730-8670 (JP); KIM Sangkyu, Aki-gun Hiroshima 730-8670 (JP); SHIMO Daisuke, Aki-gun Hiroshima 730-8670 (JP)
(74) Representative: Müller-Boré & Partner Patentanwälte PartG mbB
(86) International application number: PCT/JP2018/009224
(87) International publication number: WO 2018/168692

(57) **Abstract**

Provided is a diesel engine capable of increasing a moving distance of fuel spray in a cavity without increasing a fuel spray penetration force, thereby satisfying both of a reduction in cooling loss and an improvement in fuel spray-air mixing performance. The diesel engine (1) comprises: a cylinder head (6) covering one end of a cylinder (2); a piston (10) having a crown surface (10a) opposed to the cylinder head and reciprocatingly movable in the cylinder; and a fuel injection valve (34) attached to the cylinder head, wherein the crown surface of the piston is formed with a cavity (12) which is concaved toward a side opposite to the cylinder head, and has a round shape in top plan view, and the fuel injection valve is formed with a nozzle hole (56) directed toward the inside of the cavity, and wherein a wall surface defining the cavity has a wall segment (64) formed in a periphery of the cavity at a position deviated from a directional direction of the nozzle hole and protruding toward a radially inward side of the piston in approximately parallel to a plane including a central axis of the piston.

## Description

### TECHNICAL FIELD

The present invention relates to a diesel engine, and more particularly to a diesel engine which comprises a cylinder head covering one end of a cylinder, a piston having a crown surface opposed to the cylinder head and reciprocatingly movable in the cylinder, and a fuel injection valve attached to the cylinder head.

### BACKGROUND ART

In the field of diesel engines, particularly relatively small-sized diesel engines for use in passenger vehicles or the like, it is know to employ a piston whose crown surface is formed with a reentrant cavity, i.e., a cavity having a raised central portion and an upwardly-narrowed opening portion (see, for example, the following Patent Document 1).

In a diesel engine as disclosed in the Patent Document 1, which comprises a piston formed with the reentrant cavity, when a fuel injection valve is operated to inject a relatively large amount of fuel, e.g., in a medium or high engine load range, the flow of a fuel spray is generated such that, after reaching the periphery of the cavity, the fuel spray turns around along a wall surface of the cavity (i.e., changes direction toward the side of a radial center of the piston), and thereby mixing between the fuel spray and air is promoted. This makes it possible to reduce the amount of NOx and soot generated in a fuel-rich region, due to high temperatures caused by local combustion, and the lack of oxygen.

### PRIOR ART DOCUMENT

### [Parent Document]

Patent Document 1: JP 2015-232288A

### SUMMARY OF INVENTION

### [Technical Problem]

However, in a low engine load range, the fuel spray flow turning around along the wall surface of the cavity is scarcely generated because of a relatively small fuel injection amount. In this situation, combustion gas comes into contact with the wall surface of the cavity without moving much from the vicinity of the periphery of the cavity. Thus, if a fuel spray penetration force is excessively increased so as to improve fuel spray-air mixing performance in the medium and high engine load range, a contact area of combustion gas with the wall surface of the cavity is increased in the low engine load range, so that cooling loss is increased, thereby leading to deterioration in fuel economy performance.

On the other hand, if the fuel spray penetration force is reduced so as to reduce cooling loss, the fuel spray-air mixing performance is deteriorated, so that the amount of NOx and soot generated is undesirably increased due to local combustion.

Therefore, in order to satisfy both of the reduction in cooling loss and the improvement in the fuel spray-air mixing performance, it is required to increase a moving distance of the fuel spray in the cavity, without increasing the fuel spray penetration force.

The present invention has been made to solve the above problem, and an object thereof is to provide a diesel engine capable of increasing a moving distance of fuel spray in a cavity of a piston, without increasing a fuel spray penetration force, thereby satisfying both of a reduction in cooling loss and an improvement in fuel spray-air mixing performance.

### [Solution to Technical Problem]

In order to achieve the above object, the present invention provides a diesel engine which comprises: a cylinder head covering one end of a cylinder; a piston having a crown surface opposed to the cylinder head and reciprocatingly movable in the cylinder; and a fuel injection valve attached to the cylinder head, wherein the crown surface of the piston is formed with a cavity which is concaved toward a side opposite to the cylinder head, and has a round shape in top plan view, and the fuel injection valve is formed with a nozzle hole directed toward an inside of the cavity, and wherein a wall surface defining the cavity has a wall segment formed in a periphery of the cavity at a position deviated from a directional direction of the nozzle hole and protruding toward a radially inward side of the piston in approximately parallel to a plane including a central axis of the piston.

In the diesel engine of the present invention having the above feature, the wall surface of the cavity formed in the crown surface of the piston has a wall segment formed in a periphery of the cavity at a position deviated from a directional direction of the nozzle hole and protruding toward a radially inward side of the piston in approximately parallel to a plane including a central axis of the piston, so that, when plural fuel sprays reaching the periphery of the cavity are partly spread in a circumferential direction of the piston along the wall surface of the cavity, each of the parts of the fuel sprays changes direction toward the side of a radial center of the piston along a side surface of the wall segment without collision with neighboring fuel sprays. That is, kinetic momentum of fuel spray injected from the nozzle hole can be effectively converted into kinetic momentum oriented toward the side of the radial center of the piston. This makes it possible to increase a moving distance of fuel spray in the cavity without increasing a fuel spray penetration force, thereby improving fuel spray-air mixing performance.

Preferably, in the diesel engine of the present invention, the wall segment is formed with a recess concaved toward a radially outward side of the piston.

According to this feature, a swirl air flow flowing in the cavity can be curved along the convexity and concavity in the radial direction of the piston, formed in the periphery of the cavity by the wall segment and the recess, to generate an air flow moving toward the radially inward side of the piston. The generated air flow merges with the fuel spray turning around toward the radially inward side along the wall surface of the cavity, and the merged flow moves toward the radially inward side of the piston, so that it is possible to further improve the fuel spray-air mixing performance, without increasing the fuel spray penetration force,

Further, air in the recess is supplied to a fuel-rich region in the periphery of the cavity, so that it is possible to solve the lack of oxygen in the fuel-rich region in the vicinity of the periphery of the cavity where a fuel spray reaches, thereby suppressing the generation of NOx and soot.

Preferably, the diesel engine of the present invention, the wall segment has an extension portion extending toward the radially inward side of the piston along the wall surface of the cavity.

According to this feature, the fuel spray turning around along the wall surface of the cavity and moving toward the side of the radial center of the piston can flow toward the side of the radial center of the piston along side surfaces of the extension portion and the wall surface of the cavity, without collision with neighboring fuel sprays. This makes it possible to effectively convert kinetic momentum of fuel spray injected from the nozzle hole into kinetic momentum oriented toward the side of the radial center of the piston, thereby moving the fuel spray to the vicinity of the radial center of the piston. That is, it is possible to further increase the moving distance of fuel spray in the cavity without increasing a fuel spray penetration force, thereby further improving the fuel spray-air mixing performance.

Preferably, in the diesel engine of the present invention, the nozzle hole directed toward the inside of the cavity is formed plurally in the fuel injection valve, wherein the plural nozzle holes are arranged to spray fuel into the cavity in a radial pattern, in top plan view.

According to this feature, kinetic momentum of each of the fuel sprays injected into the cavity in a radial pattern in top plan view can be effectively converted into kinetic momentum oriented toward the side of the radial center of the piston. This makes it possible to increase the moving distance of each fuel spray in the cavity without increasing the fuel spray penetration force, thereby reliably improving the fuel spray-air mixing performance.

More preferably, in the above diesel engine, the wall segment is disposed between the directional directions of adjacent two of the plural nozzle holes.

According to this feature, kinetic momentum of each of the fuel sprays injected into the cavity in a radial pattern in top plan view and turning around toward the radially inward side of the piston along the wall surface of the cavity can be reliably converted into kinetic momentum oriented toward the side of the radial center of the piston, without being cancelled out by kinetic momenta of neighboring fuel sprays. This makes it possible to increase the moving distance of each fuel spray in the cavity without increasing the fuel spray penetration force, thereby reliably improving the fuel spray-air mixing performance.

### [Effect of Invention]

The diesel engine of the present invention can increase the moving distance of fuel spray in the cavity without increasing the fuel spray penetration force, thereby satisfying both of a reduction in cooling loss and an improvement in fuel spray-air mixing performance.

### BRIEF DESCRIPTION OF DRAWINGS

FIG. 1 is a schematic diagram showing the configuration of a diesel engine according to one embodiment of the present invention.
FIG. 2 is a top plan view schematically showing the arrangement of intake and exhaust ports in the diesel engine according to this embodiment.
FIG. 3 is a fragmentary sectional view of a distal end of a fuel injection valve in the diesel engine according to this embodiment.
FIG. 4 is a diagram showing one example of a fuel injection mode set to vary according to an operating state of the diesel engine according to this embodiment.
FIG. 5 is a perspective view of a piston in the diesel engine according to this embodiment.
FIG. 6 is a top plan view of the piston in the diesel engine according to this embodiment.
FIG. 7 is a fragmentary sectional view of the piston, a cylinder head, etc., in the diesel engine according to this embodiment, taken along the line VII-VII in FIG. 6
FIG. 8 is a fragmentary sectional view of the piston, the cylinder head, etc., in the diesel engine according to this embodiment, taken along the line Vlll-Vlll in FIG. 6.
FIG. 9 is a sectional view conceptually showing the flow of fuel spray within a combustion chamber in a conventional diesel engine.
FIG. 10 is a sectional view conceptually showing the flow of fuel spray within a combustion chamber in the diesel engine according to this embodiment.
FIG. 11 is a perspective view conceptually showing an air flow within the combustion chamber in the diesel engine according to this embodiment.
FIG. 12 is a perspective view of a piston in a first modification of this embodiment.
FIG. 13 is a perspective view of a piston in a second modification of this embodiment.
FIG. 14 is a top plan view of the piston in the second modification.

### DESCRIPTION OF EMBODIMENTS

With reference to the accompanying drawings, a diesel engine according to one embodiment of the present invention will now be described.

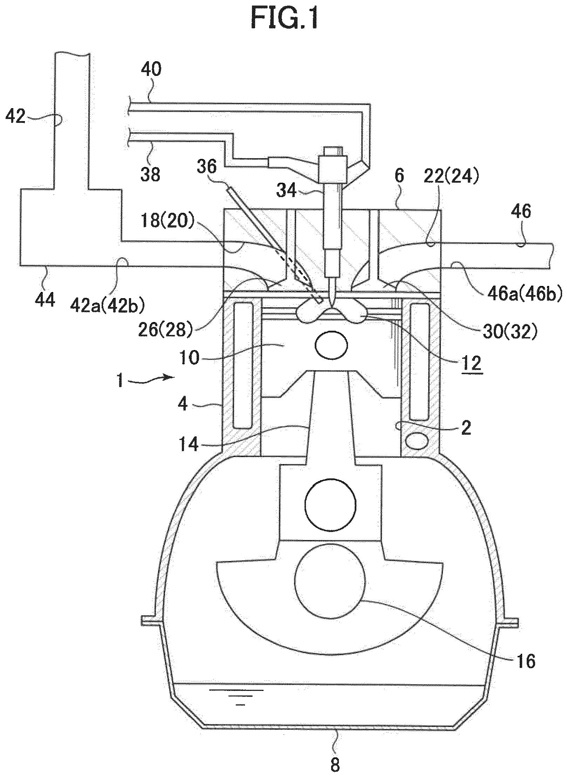

First of all, the configuration of the diesel engine according to this embodiment will be described with reference to FIGS. 1 to 4.

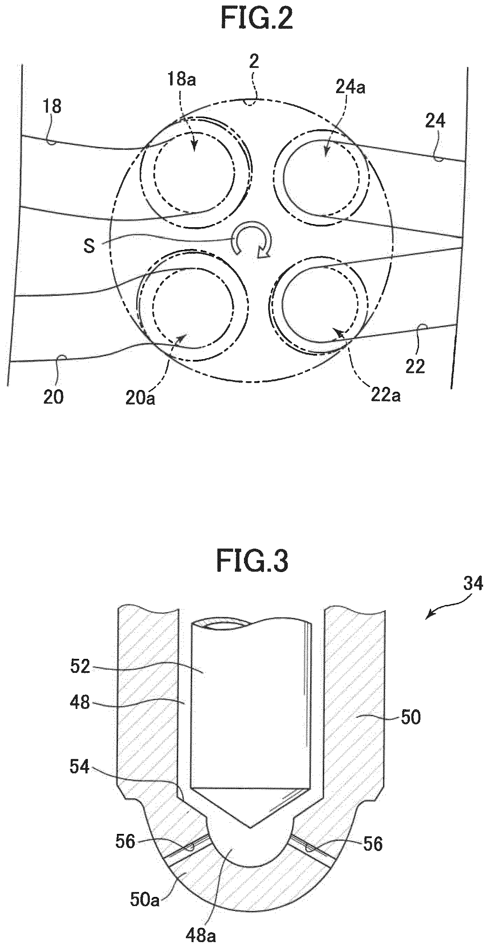

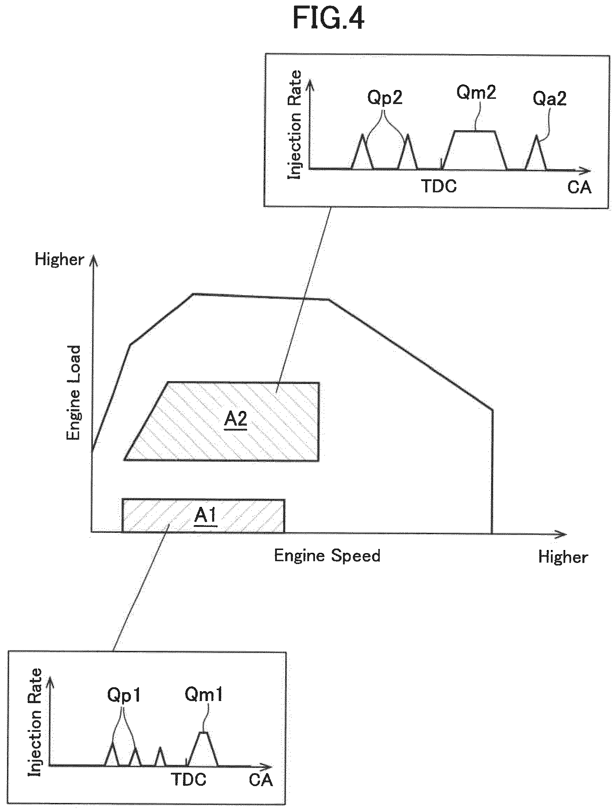

FIG. 1 is a schematic diagram showing the configuration of the diesel engine according to this embodiment, and FIG. 2 is a top plan view schematically showing the arrangement of intake and exhaust ports in the diesel engine according to this embodiment. Further, FIG. 3 is a fragmentary sectional view of a distal end of a fuel injection valve in the diesel engine according to this embodiment, and FIG. 4 is a diagram showing one example of a fuel injection mode set to vary according to an operating state of the diesel engine according to this embodiment.

In FIG. 1, the reference sign 1 denotes the diesel engine according to this embodiment. The diesel engine 1 comprises a cylinder block 4 provided with a plurality of cylinders 2, a cylinder head 6 disposed on the cylinder block 4, and an oil pan 8 disposed on the lower side of the cylinder block 4 to store therein lubricant oil. Each of the cylinder 2 is provided with a piston 10 fitted therein in a reciprocatingly movable manner. The piston 10 has a crown surface 10a formed with a cavity 12 concaved toward the side opposite to the cylinder head 6. The piston 10 is coupled to a crankshaft 16 through a connecting rod 14.

With respect to each of the cylinders 2, the cylinder head 6 is formed with two first and second intake ports 18, 20, and two first and second exhaust ports 22, 24. Each of the first and second intake ports 18, 20 is opened to one surface (lower surface) of the cylinder head 6 facing the piston 10, and to one lateral surface (intake-side lateral surface) of the cylinder head 6, and each of the first and second exhaust ports 22, 24 is opened to the surface of the cylinder head 6 facing the piston 10, and to the other lateral surface (exhaust-side lateral surface) of the cylinder head 6.

With respect to each of the cylinders 2, the cylinder head 6 is also provided with two first and second intake valves 26, 28 each configured to selectively open and close a respective one of two piston-side openings 18a, 20a of the first and second intake ports 18, 20, and two first and second exhaust valves 30, 32 each configured to selectively open and close a respective one of two piston-side openings 22a, 24a of the first and second exhaust ports 22, 24.

Further, with respect to each of the cylinders 2, the cylinder head 6 is provided with a fuel injection valve 34 for injecting fuel, and a glow plug 36 for heating intake air during a cold operation of the diesel engine 1 to enhance fuel ignitability. The fuel injection valve 34 is installed in a posture where one end thereof located on the side of the piston 10 faces a central region of the cavity 12. Here, the fuel injection valve 34 is coupled to a not-shown common rail via a fuel supply pipe 38, such that fuel can be supplied thereto from a not-shown fuel tank via the fuel supply pipe 38 and the common rail. Surplus fuel is returned to the fuel tank via a return pipe 40.

An intake passage 42 is connected to the intake-side lateral surface of the cylinder head 6, such that it communicates with the first and second intake ports 18, 20 for each of the cylinders 2. A not-shown air cleaner is provided at an upstream end of the intake passage 42 to filter intake air. Thus, intake air filtered by the air cleaner is supplied into each of the cylinders 2 via the intake passage 42 and the intake ports 18, 20. A surge tank 44 is interposed in the vicinity of a downstream end of the intake passage 42. A portion of the intake passage 42 on a downstream side with respect to the surge tank 44 is formed as a plurality of pairs of independent passages 42a, 42b branching correspondingly to the first and second intake ports 18, 20, respectively, and downstream ends of each pair of independent passages 42a, 42b are connected, respectively, to the intake ports 18, 20 of a corresponding one of the cylinders 2.

An exhaust passage 46 is connected to the exhaust-side lateral surface of the cylinder head 6 to discharge burned gas (exhaust gas) from the inside of the cylinders 2. An upstream portion of the exhaust passage 46 is formed as a plurality of pairs of independent passages 46a, 46b branching correspondingly to the first and second exhaust ports 22, 24, respectively, and upstream ends of each pair of independent passages 46a, 46b are connected, respectively, to the exhaust ports 22, 24 of a corresponding one of the cylinders 2.

As shown in FIG. 2, when viewed in a central axis of each of the cylinders 2 from the side of the cylinder head 6 (from above the cylinder 2), the piston-side openings 18a, 20a of the first and second intake ports 18, 20 and the piston-side openings 22a, 24a of the first and second exhaust ports 22, 24 are arranged in order of the piston-side opening 20a of the second intake port 20, the piston-side opening 18a of the first intake port 18, the piston-side opening 24a of the second exhaust port 24, and the piston-side opening 22a of the first exhaust port 22, in a clockwise direction.

Within the cylinder 2, in an intake stroke, a swirl flow S of intake air (horizontal (transverse) swirl flowing about a central axis of the cylinder 2) is generated in a clockwise direction when viewed from above the cylinder 2. In this embodiment, the first intake port 18 is formed as a so-called "tangential port" configured to direct a flow of intake air flowing from the piston-side opening 18a thereof into the cylinder 2 toward a circumferential direction of the cylinder 2 (a forward direction of the swirl flow S of intake air flowing in the vicinity of the piston-side opening 18a of the first and second exhaust port 22). On the other hand, the second intake port 20 is formed as a so-called "helical port" configured to introduce intake air from the piston-side opening 20a into the cylinder 2 in a helical pattern. These the first and second intake ports 18, 20 make it possible to enhance the swirl flow S of intake air in the cylinder 2.

As shown in FIG. 3, the fuel injection valve 34 comprises a tubular-shaped valve body 50 internally formed with a fuel flow passage 48 to which fuel is introduced from the common rail, and a needle valve element 52 disposed in the fuel flow passage 48 of the valve body 50 in a forwardly and backwardly movable manner. The valve body 50 has a semispherical distal end 50a, and an end of the fuel flow passage 48 corresponding to the distal end 50a is formed as a semispherical auxiliary chamber 48a. Further, an inner surface of the valve body 50 around the auxiliary chamber 48a is formed as a seat portion 54 on which a distal end of the needle valve element 52 is to be seated when the needle valve element 52 is driven forwardly.

The distal end 50a of the valve body 50 is provided with a plurality of nozzle holes 56. Each of the nozzle holes 56 is provided such that it penetrates through the distal end 50a to communicate between an outer surface of the distal end 50a of the valve body 50 and the auxiliary chamber 48a. Specifically, in this embodiment, ten nozzle holes 56 in total are provided at the distal end 50a, such that they are arranged side-by-side circumferentially at approximately even intervals. Fuel is injected through these nozzle holes 56, in a radial pattern in top plan view.

The valve body 50 is provided with a not-shown solenoid, and the needle valve element 52 is configured to be selectively driven forwardly and backwardly by an attraction force of the solenoid. When the needle valve element 52 is driven forwardly and seated on the seat portion 54, the introduction of fuel into the auxiliary chamber 48a is blocked to stop the injection of fuel from the nozzle holes 56. On the other hand, when the needle valve element 52 is driven backwardly from the seated state (FIG. 3 illustrates such an unseated state), fuel is introduced into the auxiliary chamber 48a, and fuel starts to be injected from the nozzle holes 56. Here, a fuel injection amount can be adjusted by controlling a time period for backward driving of the needle valve element 52.

The fuel injection valve 34 is installed in a posture coaxial with the cylinder 2. Specifically, assuming that a straight line extending in an upward-downward direction through a center of the distal end 50a of the valve body 50 is defined as a central axis of the fuel injection valve 34, the fuel injection valve 34 is installed in a posture where the central axis thereof is coincident with the central axis of the cylinder 2.

As shown in FIG. 4, in the diesel engine 1 according to this embodiment, for example, in an operating range A1 where an engine load is extremely low, fuel is injected from the fuel injection valve 34 by split injection consisting of three pre-injections Qp1 and one main injection Qm1. In the main injection Qm1, fuel injection is started around top dead center of a compression stroke (top dead center at the time of completion of a compression stroke), and the fuel injection amount is set to about 1 to 5 mm³. In the pre-injections Qp1, fuel is injected before top dead center of a compression stroke in an amount less than that of the main injection Qm1.

On the other hand, in an operating range A2 which is a medium engine load range where the engine load is higher than that in the operating range A1, fuel is injected from the fuel injection valve 34 by split injection consisting of two pre-injections Qp2, one main injection Qm2, and one after-injection Qa2. In the main injection Qm2, fuel injection is started around top dead center of a compression stroke, and the fuel injection amount is set to about 10 to 30 mm³. In the pre-injections Qp2, fuel is injected before top dead center of a compression stroke in an amount less than that of the main injection Qm2. In the after-injections Qa2, fuel is injected after completion of the main injection Qm2 (in the course of an expansion stroke) in an amount less than that of the main injection Qm2.

As a fuel injection mode (number of times of fuel injection, fuel injection timing, fuel injection amount, etc.) in a non-illustrated operating range other than the operating ranges A1, A2, various patterns may be employed. Generally stated, the fuel injection amount of the main injection (fuel injection to be started around top dead center of a compression stroke) is apt to be increased as the engine load becomes higher. Therefore, for example, in an operating range where the engine load is higher than that in the operating range A2, the fuel injection amount of the main injection is further increased with respect to that (10 to 30 mm³) in the operating range A2.

The fuel injection modes in the operating ranges as mention above are realized by control of a not-shown PCM (Powertrain Control Module). Specifically, the PCM is operable to sequentially determine an engine operating state based on signals input from various sensors such as an airflow sensor, an engine speed sensor, and an accelerator position sensor (which are not illustrated), and control the fuel injection valve 34 so as to comply with a target fuel injection mode preliminarily set with respect to each engine operating state.

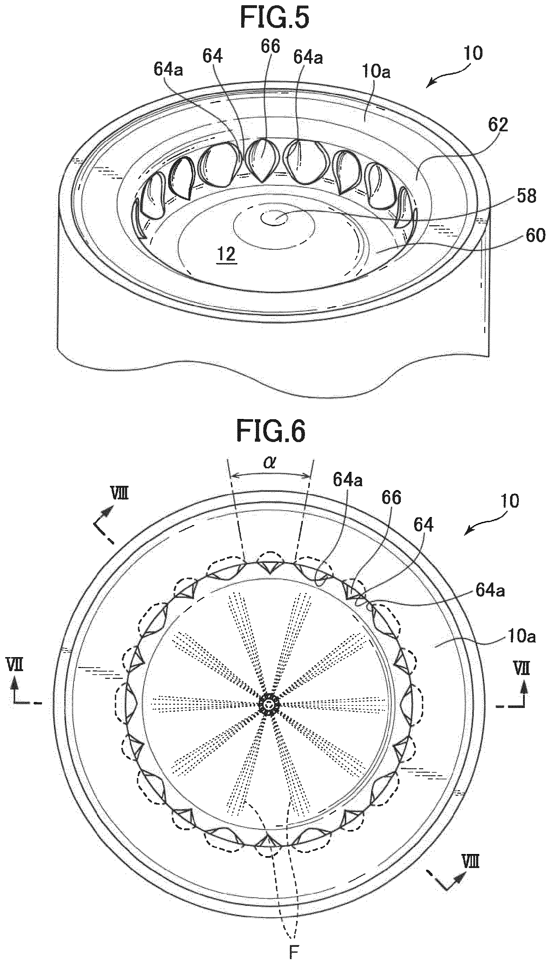

Next, with reference to FIGS. 5 to 8, the shape of the piston 10 in the diesel engine according to this embodiment will be described.

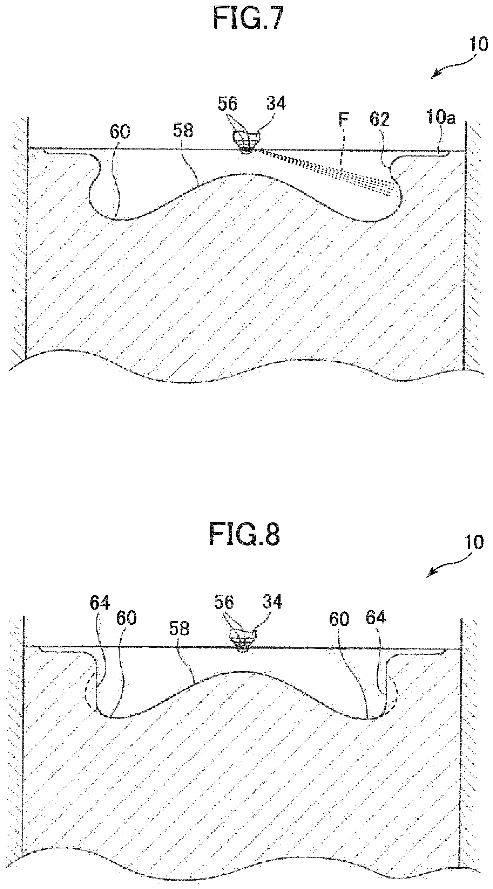

FIG. 5 is a perspective view of the piston 10 in the diesel engine according to this embodiment, and FIG. 6 is a top plan view of the piston 10 shown in FIG. 5. Further, FIG. 7 is a fragmentary sectional view of the piston 10, the cylinder head 6, etc., taken along the line VII-VII in FIG. 6 and FIG. 8 is a fragmentary sectional view of the piston 10, the cylinder head 6, etc., taken along the line VIII-VIII in FIG. 6

Here, in FIGS. 7 and 8, the piston 10 is shown in a state in which it is moved upwardly to top dead center, and, in FIGS. 7 and 8, fuel sprays injected from the nozzle holes 56 of the fuel injection valve 34 are denoted by the reference sign F. As can be understood from these figures, the cavity 12 is formed in a shape and a size capable of receiving fuel (fuel sprays F) injected from the fuel injection valve 34 at least when the piston 10 is located at a top dead center position.

As shown in FIGS. 5 to 7, the cavity 12 is formed as a so-called "reentrant cavity". Specifically, a wall surface defining the cavity 12 has: a central raised portion 58 having an approximately mountain-like shape; a peripheral concave portion 60 formed on a radially outward side of the piston 10 with respect to the central raised portion 58 to have a round shape in top plan view; and a lip portion 62 formed between the peripheral concave portion 60 and the crown surface 10a of the piston 10 (i.e., the periphery of the cavity 12) to have a round shape in top plan view.

The central raised portion 58 is raised such that it comes closer to the fuel injection valve 34 at a position closer to the center of the cavity 12, and formed such that the top of the central raised portion is located immediately below the distal end 50a of the fuel injection valve 34. The peripheral concave portion 60 is formed such that it is continuous with the central raised portion 58, and has an arc shape concaved toward the radially outward side of the piston 10 in vertical sectional view. The lip portion 62 is formed such that it is continuous with the peripheral concave portion 60, and has an arc shape convexed toward a radially inward side of the piston 10 in vertical sectional view, as shown in FIG. 7. Each of the nozzle holes 56 of the fuel injection valve 34 is directed toward the vicinity of a connection between the lip portion 62 and the peripheral concave portion 60 in a state in which the piston 10 is located around a top dead center position in a compression stroke.

As shown in FIGS. 5, 6 and 8, the peripheral concave portion 60 in the periphery of the cavity 12 is formed with a plurality of wall segments 64 each protruding toward the radially inward side of the piston 10 in approximately parallel to a plane including the central axis of the piston 10. Each of the wall segments 64 is disposed between adjacent ones of directional directions of the nozzle holes 56 of the fuel injection valve 34. In this embodiment, the ten nozzle holes 56 in total are arranged side-by-side circumferentially at approximately even intervals, so that fuel is injected in a radial pattern in top plan view, as mentioned above. Therefore, in this embodiment, ten wall segments 64 in total are arranged side-by-side circumferentially at approximately even intervals, such that each of the wall segments 64 is disposed between adjacent ones of the directional directions of the nozzle holes 56 of the fuel injection valve 34, as shown in FIG. 6.

As shown in FIG. 5, each of the wall segments has two side surfaces 64a located on both sides of the wall segments 64 in the circumferential direction of the piston 10, wherein each of the side surfaces 64a is formed in an arc shape so that a region of the peripheral concave portion 60 lying between the opposed side surfaces 64a of adjacent ones of the wall segments 64 can have an approximately round shape when viewed from the center of cavity 12.

Further, as shown in FIGS. 6 and 8, each of the wall segments 64 protrudes from the peripheral concave portion 60 toward the radially inward side of the piston 10 to reach approximately the same position as that of a distal end of the lip portion 62.

A central angle α defined between two straight lines connecting a radial center of the piston 10 and respective ones of the opposite ends of the wall segment 64, in top plan view (this angle α is equivalent to the width of the wall segment 64) is set such that, when each of the fuel sprays F injected from the nozzle holes 56 of the fuel injection valve 34 reaches the periphery of the cavity 12, the fuel spray F is received in a space between adjacent ones of the wall segments 64. In this embodiment, the central angle α of the wall segment 64 is, e.g., 20°.

Further, as shown in FIGS. 5 and 6, each of the wall segments 64 is formed with a recess 66 concaved toward the radially outward side of the piston 10. This recess 66 is located at the middle of the wall segment 64 in the circumferential direction of the piston 10, and formed in an approximately round shape when viewed from the center of the cavity 12. The recess 66 is concaved from an inner surface of the wall segment 64 toward the radially outward side of the piston 10 to reach approximately the same position as that of the peripheral concave portion 60 in the radial direction of the piston 10.

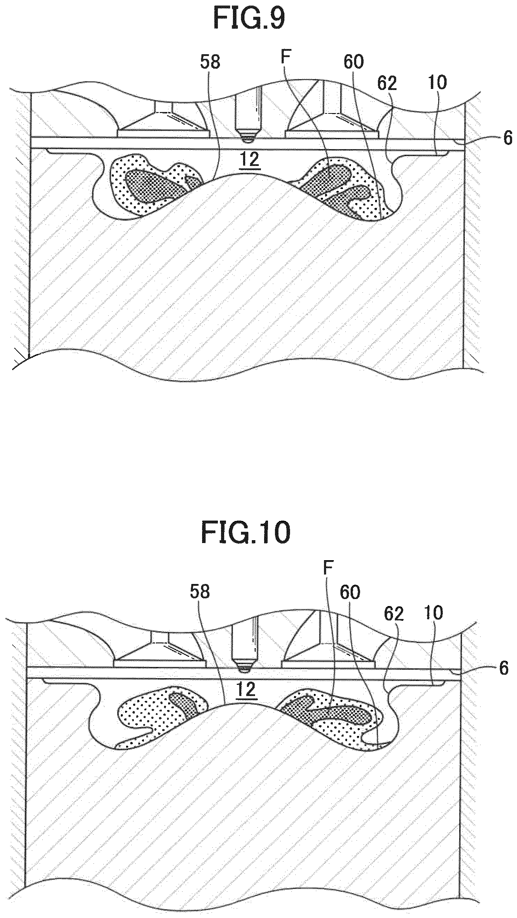

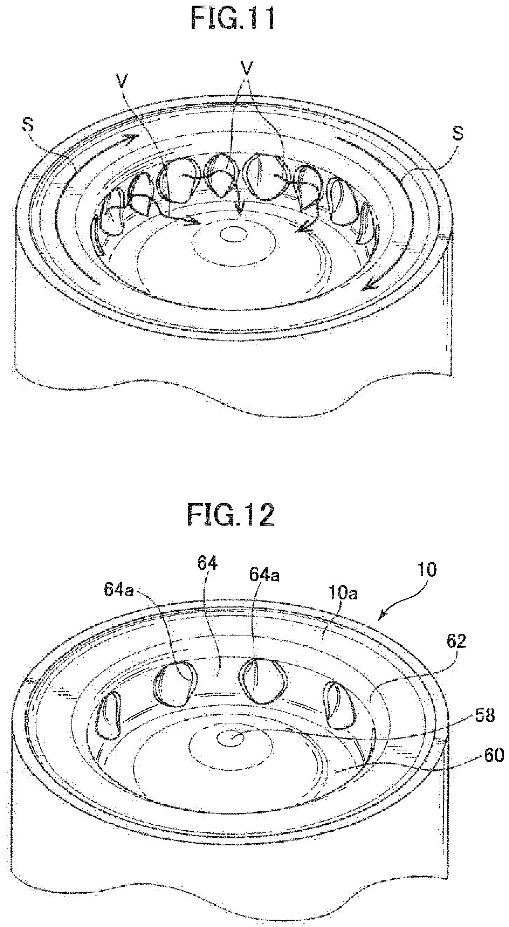

Next, with reference to FIGS. 9 to 11, functions of the diesel engine 1 according to this embodiment will be described. FIG. 9 is a sectional view conceptually showing the flow of fuel sprays F within a combustion chamber in a conventional diesel engine, and FIG. 10 is a sectional view conceptually showing the flow of fuel sprays F within a combustion chamber in the diesel engine according to this embodiment. Further, FIG. 11 is a perspective view conceptually showing an air flow within the combustion chamber in the diesel engine according to this embodiment.

It should be noted here that FIGS. 9 and 10 show the flow of fuel sprays F within the combustion chamber, just after top dead center (about 20° ATDC) of a compression stroke.

When a compression stroke progresses, and fuel is injected from the fuel injection valve 34 around top dead center of the compression stroke, fuel injected from the nozzle holes 56 reaches the vicinity of the connection between the lip portion 62 and the peripheral concave portion 60, and turns around toward the side of the radial center of the piston 10 along the peripheral concave portion 60. Subsequently, each of the fuel sprays F moves toward the side of the radial center of the piston 10 along the central raised portion 58. Then, the fuel spray F turns around toward the radially outward side of the piston 10 again in an inclined surface of the central raised portion 58, and moves toward the radially outward side of the piston 10 along the cylinder head 6. In this way, within the cavity 12, a vertical swirl having a velocity component in the radial direction of the piston 10 is generated in addition to a horizontal swirl flowing about the central axis of the cylinder 2 based on the swirl flow S of intake air.

In a conventional diesel engine devoid of the wall segments 64 provided to the peripheral concave portion 60, fuel sprays F reaching the peripheral concave portion 60 after being injected from the nozzle holes 56 are partly spread in the circumferential direction of the piston 10 along the peripheral concave portion 60, and the parts of adjacent ones of the fuel sprays F collide with each other, so that kinetic momenta of the adjacent fuel sprays F are undesirably cancelled out each other. That is, there remains a need for increasing kinetic momentum of each of the fuel sprays F turning around along the peripheral concave portion 60 and moving toward the side of the radial center of the piston 10.

Considering this, in this embodiment, the wall segments 64 are provided to block, in the circumferential direction of the piston 10, both sides of each of the fuel sprays F reaching the peripheral concave portion 60. Thus, the fuel sprays F party spread in the circumferential direction of the piston 10 along the peripheral concave portion 60 after reaching the peripheral concave portion 60 change direction toward the side of the radial center of the piston 10 along the side surfaces 64a of the wall segments 64, without mutual collision. That is, it is possible to effectively convert kinetic momentum of each of the fuel sprays F injected from the nozzle holes 56 into kinetic momentum oriented toward the side of the radial center of the piston 10.

As a result, in the embodiment as shown in FIG. 10, kinetic momentum of each of the fuel sprays F turning around along the peripheral concave portion 60 and moving toward the side of the radial center of the piston 10 becomes larger as compared with the flow of the fuel sprays F in the conventional diesel engine as shown in FIG. 9, so that the fuel spray F moves closer to the vicinity of the radial center of the piston 10 as compared with the conventional diesel engine. That is, it is possible to increase a moving distance of each of the fuel sprays F in the cavity 12 without increasing a fuel spray penetration force, thereby improving a fuel spray-air mixing performance.

In this embodiment, as mentioned above, a clockwise swirl flow S of intake air is generated in the cylinder 2 during an intake stroke when viewed from above the cylinder, wherein the swirl flow S of intake air in the cylinder 2 is enhanced by the first and second intake ports 18, 20. Specifically, in this embodiment, as shown in FIG. 11, the swirl flow S flowing in the cavity 12 can be curved along the convexity and concavity in the radial direction of the piston, formed in the peripheral concave portion 60 by the wall segments 64 and the recesses 66, to generate air flows V each moving toward the radially inward side of the piston 10. Thus, the fuel sprays reaching the vicinity of the connection between the lip portion 62 and the peripheral concave portion 60 merge with the air flows V, and mix with air while turning around radially inwardly along the wall surface of the cavity. This makes it possible to improve the fuel spray-air mixing performance without increasing the fuel sprat penetration force.

Generally, the vicinity of the peripheral concave portion 60 where the fuel sprays F reach is more likely to become fuel-rich, as compared with the remaining region in the cavity 12. However, in this embodiment, the recess 66 is formed in each of the wall segments 64 in the peripheral concave portion 60, so that air in the recesses 66 is supplied to a fuel-rich region in the vicinity of the peripheral concave portion 60. This makes it possible to solve the lack of oxygen in the fuel-rich region in the vicinity of the peripheral concave portion 60 where the fuel sprays reach, thereby suppressing the generation of NOx and soot

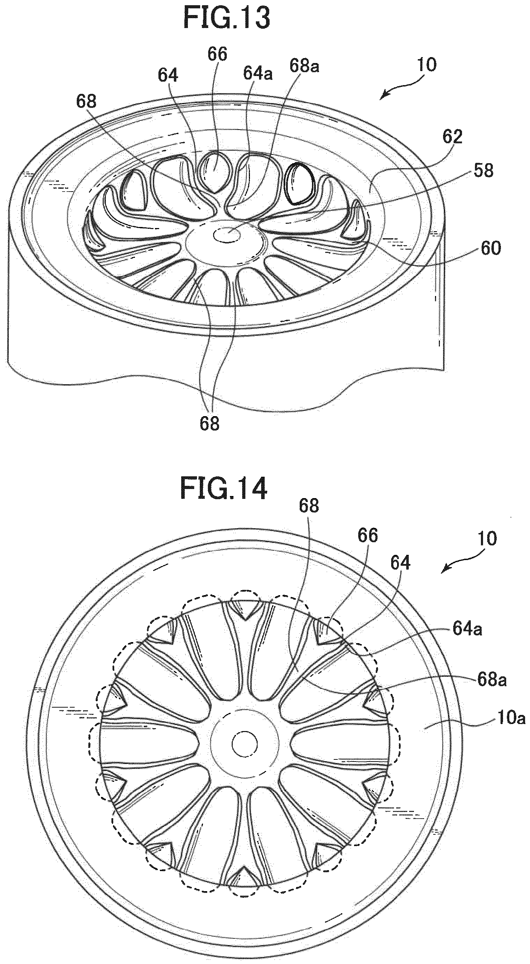

Next, some modifications of the above embodiment will be described. FIGS. 12 and 13 are perspective views of pistons in first and second modifications of this embodiment, and FIG. 14 is a top plan view of the piston in the second modification.

The above embodiment has been described based on an example where each of the wall segments 64 is formed with the recess 66 concaved toward the radially outward side of the piston 10. Alternatively, the formation of the recess 66 may be omitted, as shown in FIG. 12.

In this modified embodiment, the wall segments 64 are provided to block, in the circumferential direction of the piston 10, both sides of each of the fuel sprays F reaching the peripheral concave portion 60. Thus, each of the fuel sprays F party spread in the circumferential direction of the piston 10 along the peripheral concave portion 60 after reaching the peripheral concave portion 60 changes direction toward the side of the radial center of the piston 10 along the opposed side surfaces 64a of adjacent ones of the wall segments 64, without collision with neighboring ones of the fuel sprays F, as with the above embodiment. That is, it is possible to effectively convert kinetic momentum of each of the fuel sprays F injected from the nozzle holes 56 into kinetic momentum oriented toward the side of the radial center of the piston 10.

Further, the above embodiment has been described based on an example where the wall segments are formed in the periphery of the cavity 12. However, each of the wall segments 64 may have an extension portion 68 extending from the peripheral concave portion 60 toward the radially inward side of the piston 10 along the central raised portion 58, as shown in FIGS. 13 and 14. In this case, each of the side surfaces 64a of the wall segment 64 is formed in a linear shape so that a region of the wall surface of the cavity 12 lying between the opposed side surfaces 64a of adjacent ones of the wall segments 64 and between opposed side surfaces 68a of adjacent ones of the extension portions 68 can have an approximately semi-elliptical shape when viewed downwardly from the side of the cylinder head 6.

In this modified embodiment, in addition to provide the wall segments 64 to block, in the circumferential direction of the piston 10, both sides of each of the fuel sprays F reaching the peripheral concave portion 60, the extension portions 68 are provided to block, in the circumferential direction of the piston 10, both sides of each of the fuel sprays F turning around along the peripheral concave portion 60 and moving toward the side of the radial center of the piston 10 along the central raised portion 58. Thus, each of the fuel sprays F turning around along the peripheral concave portion 60 and moving toward the side of the radial center of the piston 10 can flow toward the side of the radial center of the piston 10 along the side surfaces 68a of the adjacent extension portions 68 and the inclined surface of the central raised portion 58. This makes it possible to effectively convert kinetic momentum of each of fuel sprays F injected from the nozzle holes 56 into kinetic momentum oriented toward the side of the radial center of the piston 10, thereby moving the fuel spray F to the vicinity of the radial center of the piston 10. That is, it is possible to further increase the moving distance of each of the fuel sprays F in the cavity 12 without increasing the fuel spray penetration force, thereby further improving the fuel spray-air mixing performance.

Further, the above embodiment has been described based on an example where the fuel injection valve 34 has the ten nozzle holes 27. However, the present invention may be applied to a diesel engine equipped with a fuel injection valve 34 having a different plural number of nozzle holes 27.

Next, functions/effects of the diesel engines 1 according to the above embodiment and the above modified embodiments will be described.

Firstly, the wall surface of the cavity 12 formed in the crown surface 10a of the piston 10 has the wall segments 64 each formed in the periphery of the cavity 12 at a position deviated from the directional direction of a respective one of the nozzle holes 56 and protruding toward the radially inward side of the piston 10 in approximately parallel to a plane including the central axis of the piston 10, so that, when plural fuel sprays F reaching the periphery of the cavity 12 are partly spread in the circumferential direction of the piston 10 along the wall surface of the cavity 12, each of the parts of the fuel sprays F changes direction toward the side of the radial center of the piston 10 along the opposed side surfaces 64a of adjacent ones of the wall segments 64 without collision with neighboring ones of the fuel sprays F. That is, kinetic momentum of each of the fuel sprays F injected from the nozzle holes 56 can be effectively converted into kinetic momentum oriented toward the side of the radial center of the piston 10. This makes it possible to increase the moving distance of each of the fuel sprays F in the cavity 12 without increasing the fuel spray penetration force, thereby improving the fuel spray-air mixing performance.

Secondly, each of the wall segments 64 is formed with the recess 66 concaved toward the radially outward side of the piston 10.

A swirl flow S of intake air flowing in the cavity 12 can be curved along the convexity and concavity in the radial direction of the piston 10, formed in the peripheral concave portion 60 by the wall segments 60 and the recesses 66, to generate air flows V each moving toward the radially inward side of the piston 10. This air flows V merge with the fuel sprays F turning around toward the radially inward side along the wall surface of the cavity 12, and the merged flow moves toward the radially inward side of the piston 10, so that it is possible to further improve the fuel spray-air mixing performance, without increasing the fuel spray penetration force,

Further, air in the recesses 66 is supplied to a fuel-rich region in the periphery of the cavity 12, so that it is possible to solve the lack of oxygen in the fuel-rich region in the vicinity of the periphery of the cavity 12 where the fuel sprays F reach, thereby suppressing the generation of NOx and soot.

Thirdly, each of the wall segments 64 has the extension portion 68 extending toward the radially inward side of the piston 10 along the wall surface of the cavity 12. In this case, each of the fuel sprays F turning around along the peripheral concave portion 60 and moving toward the side of the radial center of the piston 10 can flow toward the side of the radial center of the piston 10 along the opposed side surfaces 68a of the adjacent ones of the extension portions 68 and the inclined surface of the central raised portion 58, without collision with neighboring ones of the fuel sprays F. This makes it possible to effectively convert kinetic momentum of each of the fuel sprays F injected from the nozzle holes 56 into kinetic momentum oriented toward the side of the radial center of the piston 10, thereby moving the fuel spray F to the vicinity of the radial center of the piston 10. Thus, it becomes possible to further increase the moving distance of each of fuel sprays F in the cavity 12 without increasing the fuel spray penetration force, thereby further improving the fuel spray-air mixing performance.

Fourth, the plural nozzle holes 56 directed toward the inside of the cavity 12 are formed in the fuel injection valve 34, such that they are arranged to spray fuel into the cavity 12 in a radial pattern, in top plan view. Thus, kinetic momentum of each of the fuel sprays injected into the cavity 12 in a radial pattern in top plan view can be effectively converted into kinetic momentum oriented toward the side of the radial center of the piston 10. This makes it possible to increase the moving distance of each of the fuel sprays F in the cavity 12 without increasing the fuel spray penetration force, thereby reliably improving the fuel spray-air mixing performance.

In particular, each of the wall segments 64 is disposed between the directional directions of adjacent two of the plural nozzle holes. Thus, kinetic momentum of each of the fuel sprays injected into the cavity 12 in a radial pattern in top plan view and turning around toward the radially inward side of the piston 10 along the wall surface of the cavity 12 can be reliably converted into kinetic momentum oriented toward the side of the radial center of the piston 10, without being cancelled out by kinetic momentum of neighboring ones of the fuel sprays F. This makes it possible to increase the moving distance of each of the fuel sprays F in the cavity 12 without increasing the fuel spray penetration force, thereby reliably improving the fuel spray-air mixing performance.

### LIST OF REFERENCE SIGNS

1: diesel engine
2: cylinder
6: cylinder head
10: piston
10a: crown surface
12: cavity
18: first intake port
20: second intake port
22: first exhaust port
24: second exhaust port
34: fuel injection valve
56: nozzle hole
58: central raised portion
60: peripheral concave portion
62: lip portion
64: wall segment
64a: side surface
66: recess
68: extension portion
68a: side surface

## Claims

1. A diesel engine comprising: a cylinder head covering one end of a cylinder; a piston having a crown surface opposed to the cylinder head and reciprocatingly movable in the cylinder; and a fuel injection valve attached to the cylinder head,
wherein
the crown surface of the piston is formed with a cavity which is concaved toward a side opposite to the cylinder head, and has a round shape in top plan view, and
the fuel injection valve is formed with a nozzle hole directed toward an inside of the cavity,
and wherein a wall surface defining the cavity has a wall segment formed in a periphery of the cavity at a position deviated from a directional direction of the nozzle hole and protruding toward a radially inward side of the piston in approximately parallel to a plane including a central axis of the piston.

2. The diesel engine as recited in claim 1, wherein the wall segment is formed with a recess concaved toward a radially outward side of the piston.

3. The diesel engine as recited in claim 1 or 2, wherein the wall segment has an extension portion extending toward the radially inward side of the piston along the wall surface of the cavity.

4. The diesel engine as recited in any one of claims 1 to 3, wherein the nozzle hole directed toward the inside of the cavity is formed plurally in the fuel injection valve, wherein the plural nozzle holes are arranged to spray fuel into the cavity in a radial pattern, in top plan view.

5. The diesel engine as recited in claim 4, wherein the wall segment is disposed between the directional directions of adjacent two of the plural nozzle holes.

6. The diesel engine as recited in any one of claims 1 to 5, wherein the wall surface defining the cavity has:
a central raised portion raised from the wall surface toward the cylinder head in a radially central region of the piston;
a peripheral concave portion formed on a radially outward side of the piston with respect to the central raised portion and concaved toward the radially outward side of the piston, in sectional view along the central axis; and
a lip portion protruding toward the radially inward side of the piston, in sectional view along the central axis,
wherein the nozzle hole of the fuel injection valve is directed toward a vicinity of a connection between the lip portion and the peripheral concave portion, when the piston is located around a top dead center position.
